# EUROPÄISCHE PATENTANMELDUNG

(11) **EP 3 189 901 A1**
(43) Veröffentlichungstag der Anmeldung: **12.07.2017**
(21) Anmeldenummer: 16150747.0
(22) Anmeldetag: 11.01.2016
(51) Int. Cl.: B05C 17/005, F16B 13/14

(54) **INJEKTOR ZUM VERFÜLLEN EINES RINGRAUMS UM EINEN ANKERBOLZEN**

(71) Anmelder: HILTI Aktiengesellschaft, 9494 Schaan (LI)
(72) Erfinder: Hakenholt, Christoph, 6800 Feldkirch (AT); Schranz, Bernhard, 7432 Oberschützen (AT); Nguyen, Huu Toan, 9453 Eichberg (CH)
(74) Vertreter: Hilti Aktiengesellschaft Corporate Intellectual Property

(57) **Zusammenfassung**

Die Erfindung betrifft einen Injektor (3) zum Verfüllen eines um einen Ankerbolzen (10) gebildeten Ringraums, mit einer Kolbenscheibe (31), welche eine Durchgangsöffnung für den Ankerbolzen (10) aufweist, und einer der Kolbenscheibe (31) vorgelagerten Menge (30) einer aushärtbaren Masse, wobei die Kolbenscheibe (31) einen Kolben zum Verdrängen zumindest eines Teils der Menge (30) der aushärtbaren Masse in den Ringraum (97) bildet. Die Erfindung betrifft ferner eine Befestigungsanordnung mit einem solchen Injektor (3), ein Gebinde mit einem solchen Injektor (3) und ein Verfahren zum Installieren eines Ankers (1) unter Verwendung eines solchen Injektors (3).

## Beschreibung

Die Erfindung betrifft einen Injektor zum Verfüllen eines um einen Ankerbolzen gebildeten Ringraums, eine Befestigungsanordnung mit einem solchen Injektor, ein Gebinde mit einem solchen Injektor und ein Verfahren zum Installieren eines Ankers unter Verwendung eines solchen Injektors.

Es ist bekannt, den Ringraum, der um den Ankerbolzen eines in einem Loch verankerten mechanischen Ankers, insbesondere Spreizankers, gebildet ist, mit einer aushärtbaren Masse zu verfüllen. Hierdurch kann der Anker in radialer Richtung im Loch und auch im Anbauteil abgestützt werden, was die Lastwerte, insbesondere bei dynamischer Belastung und/oder zyklischer Belastung im gerissenen Beton, verbessern kann. Gemäss DE 10204591 A1 erfolgt das Verfüllen des Ringraums von der Mitte des Lochs her, nämlich durch einen im Ankerbolzen gebildeten Füllkanal. Insbesondere wird die Düse eines Injektionsgeräts dichtend am Füllkanal angesetzt und Masse in den Füllkanal eingefüllt. Die eingefüllte Masse tritt durch ein Querloch im Bolzen aus.

Aus der WO 11116918 A2 geht eine Injektions-Unterlegscheibe hervor, die eine Befüllöffnung und eine Entlüftungsöffnung aufweist. Diese Injektions-Unterlegscheibe kommt bei einem Verfahren zur nachträglichen Ertüchtigung eines in ein Loch eingesetzten Schwerlastankers zum Einsatz. Bei dem Verfahren wird mittels eines Injektionsschlauchs eine Injektionseinrichtung an die Befüllöffnung angeschlossen und Masse von der Injektionseinrichtung über den Injektionsschlauch und über die Injektions-Unterlegscheibe in das Loch gefördert.

Eine weitere Unterlegscheibe mit einer Durchgangsöffnung zum Einfüllen von aushärtbarer Masse in das Loch ist aus der DE 10111470 A1 bekannt. Unterlegscheiben mit Durchgangsöffnungen zum Einfüllen von aushärtbarer Masse in das Loch werden ferner unter dem Namen "Hilti Dynamic Set" angeboten. Auch beim "Hilti Dynamic Set" wird eine Injektionseinrichtung an die Durchgangsöffnung angeschlossen und Masse von der Injektionseinrichtung über die Durchgangsöffnung in das Loch gefördert.

Die DE 102010037755 A1 beschreibt eine Einrichtung zum Verfüllen eines Langlochs durch welches ein Ankerbolzen ragt. Gemäss DE 102010037755 A1 wird die Einrichtung nicht unter die Mutter geklemmt, sondern ist über den Ankerbolzen und die Mutter steckbar ist, was ermöglichen soll, dass die Einrichtung aus Kunststoff besteht.

Die DE 102014106662 A1 beschreibt einen Innengewindeanker und schlägt zur Abdichtung eines Ankerlochs gegen Flüssigkeitseintritt einen lochscheibenförmigen Dichtflansch vor, der flüssigkeitsdicht an einem Ende des Innengewindeankers angebracht ist, und der eine Vertiefung an einer Unterseite aufweist, die durch Einfüllöffnungen mit einer Dichtmasse verfüllt werden kann.

Weitere Anker, bei denen Spreizelemente in Kombination mit aushärtbaren Massen eingesetzt werden, sind aus den Schriften DE 10360156 A1, DE 102006000475 A1, DE 10216897 A1, DE 10060510 A1, WO 9857035 A1, US 5919006 A, US 5636945 A, US 5042961 A, US 5064312 A, US 4601614 A, US 4516883 A, US 4556344 A, US 3702060A, US 3695045 A, US 3204416 A, US 3326004 A, US 2952129 A, US 3379019 A, US 2667037 A und DE 102011055878 A1 bekannt.

Die DE 19749571 A1 beschreibt einen Anker zur Befestigung von dynamisch querbelasteten Gegenständen an einem Befestigungsgrund, mit einem chemisch verankerten Ankerbolzen, der an seinem hinteren Teil eine den Ankerbolzen umschliessende Bundbuchse aufweist, die nach dem Installieren des Ankers in den der Bohrlochmündung benachbarten, im Durchmesser vergrösserten Bereich des Bohrloches hineinragt und mit ihrem Anschlagbund gegen die Oberfläche des Befestigungsgrundes anliegt, wobei zwischen dem Anschlagbund und dem vorderen Ende der Bundbuchse ein mit Mörtel füllbarer, die Bundbuchse umschliessender Ringraum vorgesehen ist.

Die DE 102009006207 A1 und die US 20090180831 A1 lehren, Ringräume um Ankerbolzen mit Festkörpern auszufüllen.

Aufgabe der Erfindung ist es, einen besonders einfach und schnell zu bedienenden und zugleich günstigen und zuverlässigen Injektor zum Verfüllen eines um einen Ankerbolzen gebildeten Ringraums, eine Befestigungsanordnung mit einem solchen Injektor, ein Gebinde mit einem solchen Injektor und ein Verfahren zum Installieren eines Ankers unter Verwendung eines solchen Injektors anzugeben.

Die Aufgabe wird erfindungsgemäss durch einen Injektor mit den Merkmalen des Anspruchs 1, eine Befestigungsanordnung mit einem solchen Injektor mit den Merkmalen des Anspruchs 9, ein Gebinde mit einem solchen Injektor mit den Merkmalen des Anspruchs 10 und ein Verfahren zum Installieren eines Ankers unter Verwendung eines solchen Injektors mit den Merkmalen des Anspruchs 11 gelöst. Die weiteren, abhängigen Ansprüche geben bevorzugte Ausführungsformen an.

Ein erfindungsgemässer Injektor zum Verfüllen eines um einen Ankerbolzen gebildeten Ringraums ist ausgestattet mit einer Kolbenscheibe, welche eine Durchgangsöffnung für den Ankerbolzen aufweist, und einer der Kolbenscheibe vorgelagerten Menge einer aushärtbaren Masse, wobei die Kolbenscheibe einen Kolben zum Verdrängen zumindest eines Teils der Menge der aushärtbaren Masse, insbesondere aus dem Injektor, in den Ringraum bildet.

Ein Grundgedanke der Erfindung kann darin gesehen werden, die auszupressende aushärtbare Masse mit einer Kolbenscheibe zu kombinieren, durch welche der Ankerbolzen des Ankers hindurchgeführt wird. Die Erfindung hat erkannt, dass bei üblichen Befestigungsanordnungen mit einem Anker häufig eine Unterlegscheibe vorgesehen ist, durch welche der Ankerbolzen des Ankers hindurchgeführt ist, und welche beim Installieren des Ankers an das am Substrat zu befestigende Anbauteil angepresst wird. Die Erfindung schlägt nun vor zwischen dieser Unterlegscheibe und dem Anbauteil beziehungsweise zwischen dieser Unterlegscheibe und dem unter dem Anbauteil liegenden Substrat eine Menge einer aushärtbaren Masse anzuordnen. In dieser Konfiguration wirkt die Unterlegscheibe als Kolbenscheibe, welche beim Anpressen der Unterlegscheibe an das Anbauteil oder unmittelbar an das Substrat beim Installieren des Ankers zumindest ein Teil der Menge der aushärtbaren Masse in den Ringraum um den Ankerbolzen herum auspresst.

Bei Verwendung eines erfindungsgemässen Injektors wird die aushärtbare Masse also im Rahmen der Installation des Ankers automatisch in den Ringraum um den Ankerbolzen herum auspresst: Der erfindungsgemässe Injektor wird einfach auf den Anker aufgesteckt und die Ankermutter wird wie üblich angezogen und dann ist das System fertig. Es wird somit insbesondere kein zusätzlicher Arbeitsgang und kein weiteres Werkzeug wie zum Beispiel eine separate Injektionseinrichtung, die aufwändig angeschlossen werden müsste, benötigt. Somit ist ein besonders einfacher, schneller, sicherer, zuverlässiger und auch kostengünstiger Befüllvorgang gegeben. Da erfindungsgemäss keine Zuleitung benötigt wird, kann auch die Abfallmenge besonders klein gehalten werden. Da nach der Erfindung mit einer fliessfähigen, aushärtbaren Masse gearbeitet wird, die erst nach einer gewissen zeitlichen Verzögerung, insbesondere im Ringraum, aushärtet, sind überdies die Anforderungen hinsichtlich der Ausrichtung der Komponenten im Gegensatz zu Systemen, bei denen Festkörper in den Ringraum eingebracht werden, vergleichsweise gering.

Die erfindungsgemässe Kolbenscheibe bildet einen Kolben zum Verdrängen zumindest eines Teils der Menge der aushärtbaren Masse aus dem Injektor in den Ringraum und zum Einpressen zumindest eines Teils der Menge der aushärtbaren Masse aus dem Injektor in den Ringraum. Ein solcher Ringraum verbleibt regelmässig im Substrat und auch im Anbauteil um den Ankerbolzen herum, da der Ankerbolzen regelmässig durchmesserkleiner als das Loch im Anbauteil und im Substrat ist, um ein zuverlässiges Einführen des Ankerbolzens in das Loch zu gewährleisten.

Bei einem erfindungsgemässen Injektor ist aushärtbare Masse durch axiales Anpressen der Kolbenscheibe an eine Oberfläche aus dem Injektor auspressbar, insbesondere durch axiales Anpressen der Kolbenscheibe an die Oberfläche des Anbauteils, aber auch an die Oberfläche des Substrats, wobei diese beiden Oberflächen das Loch, in welches der Ankerbolzen eingeführt wird, ringartig umgeben. Erfindungsgemäss ist zwischen der Kolbenscheibe einerseits und dem Substrat und/oder dem Anbauteil andererseits ein Kolbenraum gegeben, welcher durch Annähern der Kolbenscheibe an das Substrat und/oder an das Anbauteil unter Auspressen von aushärtbarer Masse volumenverkleinert wird. Beim Betrieb des Injektors wird die Kolbenscheibe axial an das Substrat und/oder an das Anbauteil angenähert, das heisst die Kolbenscheibe wird insbesondere zumindest annähernd parallel zur Durchgangsöffnung in der Kolbenscheibe und/oder insbesondere zumindest annähernd parallel zur Längsachse des Ankerbolzens bewegt.

Soweit hier von radial, axial und/oder der Umfangsrichtung die Rede ist, kann sich dies insbesondere auf die Längsachse des Ankerbolzens und/oder die Längsachse des Injektors beziehen, wobei letztere insbesondere durch die Durchgangsöffnung in der Kolbenscheibe definiert sein kann.

Die aushärtbare Masse kann auch als fliessfähige, aushärtbare Füllmasse bezeichnet werden. Bei der Masse kann es sich beispielsweise um einen Mehrkomponenten-Kunstharzmörtel auf der Basis von Polyester- oder Epoxidharz handeln, der durch Vermischung der Komponenten aktiviert wird. Insbesondere in diesem Fall kann die aushärtbare Masse im Injektor, insbesondere in dessen Reservoir, in Form von getrennten Vorprodukten vorliegen, welche beim Auspressen gemischt werden. Bevorzugt handelt es sich bei der Masse um einen Klebstoff.

Der Anker, an dessen Ankerbolzen der erfindungsgemässe Injektor angeordnet wird, kann beispielsweise ein Spreizanker sein, vorzugsweise ein Spreizanker des Bolzentyps. Ein Spreizanker kann insbesondere ein Keilgetriebe aufweisen, welches eine Zugbewegung des Ankerbolzens relativ zum Substrat in eine radiale Bewegung eines am Ankerbolzen angeordneten Spreizelements, insbesondere einer am Ankerbolzen angeordneten Spreizhülse, relativ zum Ankerbolzen umwandelt und den Anker so am Substrat verankert. Der Anker kann auch ein chemischer Anker sein, der mittels einer weiteren aushärtbaren Masse im Substrat verankert wird, wobei diese weitere aushärtbare Masse chemisch gleich oder verschieden zur aushärtbaren Masse des Injektors sein kann.

Insbesondere wenn an der Kolbenscheibe Mischkörper angeordnet sind, kann diese auch als Mischer-Unterlegscheibe bezeichnet werden. Der Ringraum um den Ankerbolzen kann insbesondere ein Ringspalt sein.

Die Kolbenscheibe kann vorzugsweise aus einem Metallmaterial bestehen. Sie kann zum Beispiel in einem Stanzprozess gefertigt werden, was im Hinblick auf die Kosten vorteilhaft sein kann.

Je nach Ausgestaltung des Injektors wird häufig ein mehr oder weniger grosses Restvolumen der Menge der aushärtbaren Masse im Injektor zurückbleiben, das heisst die Kolbenscheibe wird in der Regel nur einen Teil, wenn auch häufig einen grossen Teil, der Menge der aushärtbaren Masse in den Ringraum verdrängen.

Besonders bevorzugt ist es, dass die Menge der aushärtbaren Masse in einem Reservoir angeordnet ist. Hiermit kann die aushärtbare Masse in besonders einfacher und zuverlässiger Weise vor Umwelteinflüssen geschützt werden, und die Herstellung des Injektors kann weiter vereinfacht werden. Das Reservoir kann beispielsweise ein Beutel, insbesondere ein Folienbeutel sein. Das Reservoir kann insbesondere eine mit der Durchgangsöffnung der Kolbenscheibe fluchtende Durchgangsöffnung aufweisen, um ein Durchführen des Ankerbolzens durch den Injektor ohne Beeinträchtigung der aushärtbaren Masse zu gewährleisten. Insbesondere wenn die aushärtbare Masse eine sehr hohe Viskosität aufweist, so dass die Masse alleine aufgrund ihrer Viskosität hinreichend formstabil ist, oder wenn der Injektor die Menge der aushärtbaren Masse vollständig umschliesst, kann das Reservoir auch entfallen.

Eine weitere bevorzugte Ausgestaltung der Erfindung liegt darin, dass der Injektor eine Dichtungsscheibe aufweist, wobei die Menge der aushärtbaren Masse zumindest teilweise, insbesondere vollständig, zwischen, insbesondere axial zwischen, der Kolbenscheibe und der Dichtungsscheibe angeordnet ist. Eine solche Dichtungsscheibe kann den Fluss der aushärtbaren Masse beim Auspressen des Injektors kanalisieren und somit in besonders einfacher Weise dafür sorgen, dass die aushärtbare Masse besonders zuverlässig in den Ringraum hineingepresst wird und insbesondere nicht einfach weg gedrückt wird. Darüber hinaus kann bei Verwendung einer Dichtungsscheibe die Menge der aushärtbaren Masse in besonders einfacher Weise positioniert werden, da die Menge der aushärtbaren Masse zwischen der Kolbenscheibe und der Dichtungsscheibe eingehaust werden kann. Vorzugsweise kann die Menge der aushärtbaren Masse, insbesondere das Reservoir, mit der Dichtungsscheibe verbunden sein, was herstellungstechnisch vorteilhaft sein kann und die Positionierung der Menge der aushärtbaren Masse weiter erleichtern kann. Die Dichtungsscheibe kann auch Mischkanäle bilden, was die Durchmischung der aushärtbaren Masse noch weiter verbessern kann. Es kann vorgesehen sein, dass die Dichtungsscheibe während des Auspressvorgangs der aushärtbaren Masse zerstört wird. Die Dichtungsscheibe kann beispielsweise aus Kunststoff bestehen, was im Hinblick auf den Herstellungsaufwand vorteilhaft sein kann. zum Beispiel kann die Dichtungsscheibe in einem Spritzgussverfahren hergestellt werden. Vorzugsweise kann die Dichtungsscheibe an ihrer der Kolbenscheibe abgewandten Seite eine Dichtlippe für eine besonders gute Dichtwirkung mit der das Loch umgebenden Oberfläche aufweisen.

Besonders zweckmässig ist es, dass der Injektor zumindest eine Dichtungshülse aufweist, wobei die Menge der aushärtbaren Masse zumindest teilweise innerhalb der Dichtungshülse angeordnet ist. Eine solche Dichtungshülse, welche einen Kolbenraum der Kolbenscheibe radial begrenzen kann, kann einem unerwünschten radialen Abfluss der aushärtbaren Masse in besonders einfacher und zuverlässiger Weise entgegenwirken.

Zweckmässigerweise ist die Dichtungshülse axial fest an einem der beiden Elemente Kolbenscheibe oder Dichtungsscheibe angeordnet, und vorzugsweise einstückig hiermit ausgebildet, und das jeweils andere Element, Dichtungsscheibe beziehungsweise Kolbenscheibe, ist in der Dichtungshülse axial verschiebbar.

Somit kann in einer ersten Ausführungsform die Kolbenscheibe verschiebbar, vorzugsweise axial verschiebbar, innerhalb der Dichtungshülse angeordnet sein. Insbesondere kann die Dichtungshülse an der Dichtungsscheibe befestigt sein und vorzugsweise einstückig mit der Dichtungshülse ausgeführt sein. Die Dichtungshülse besteht vorzugsweise aus einem Kunststoffmaterial, wodurch in besonders einfacher Weise eine besonders gute Dichtfunktion realisiert werden kann.

In einer zweiten Ausführungsform kann die Dichtungshülse an der Kolbenscheibe befestigt sein, vorzugsweise zumindest axial befestigt sein, und insbesondere einstückig mit der Kolbenscheibe ausgeführt sein. Bei dieser Ausgestaltung kann die Dichtungsscheibe axial verschiebbar innerhalb der Dichtungshülse angeordnet sein.

Es können auch zwei Dichtungshülsen vorgesehen sein, eine erste an der Kolbenscheibe und eine zweite an der Dichtungsscheibe. Die beiden Dichtungsscheiben können teleskopartig ineinander verlaufen.

Weiterhin ist es zweckmässig, dass der Injektor Mischkörper aufweist, die zur Menge der aushärtbaren Masse hin, insbesondere zum Reservoir hin, vorstehen. Solche Mischkörper, die beispielsweise zapfenförmig ausgebildet sein können, können Mischkanäle definieren und/oder begrenzen und somit die Durchmischung der aushärtbaren Masse beim Auspressen aus dem Injektor in besonders einfacher Weise verbessern, so dass die Zuverlässigkeit noch weiter gesteigert werden kann. Die Mischkörper können an der Kolbenscheibe und/oder an der Dichtungsscheibe angeordnet sein, soweit die Letztere vorhanden ist.

Vorzugsweise weist der Injektor Ausnehmungen zum Aufnehmen zumindest eines Teils der Mischkörper beim Verdrängen des zumindest einen Teils der Menge der aushärtbaren Masse mittels der Kolbenscheibe auf. Diese Ausnehmungen befinden sich vorzugsweise axial versetzt am jeweils anderen der beiden Elemente, Kolbenscheibe oder Dichtungsscheibe, an welchem die Mischkörper angeordnet sind, so dass die Mischkörper beim Annähern der Kolbenscheibe an die Dichtungsscheibe beim Auspressen der aushärtbaren Masse fingerartig in die Ausnehmungen eingreifen können. Dies ermöglicht bei guter Mischwirkung der aushärtbaren Masse ein besonders vollständiges Auspressen der aushärtbaren Masse.

Eine andere bevorzugte Weiterbildung der Erfindung liegt darin, dass die Kolbenscheibe auf ihrer der Menge der aushärtbaren Masse zugewandten Seite, das heisst vorzugsweise auf ihrer der Dichtungsscheibe zugewandten Seite, zumindest bereichsweise konkav ausgebildet ist, und/oder dass die Dichtungsscheibe auf ihrer der Menge der aushärtbaren Masse zugewandten Seite, das heisst vorzugsweise auf ihrer der Kolbenscheibe zugewandten Seite, zumindest bereichsweise konkav ausgebildet ist. Durch die konkave Ausgestaltung der jeweiligen Scheiben kann einem radialen Abfluss der aushärtbaren Masse besonders einfach und wirkungsvoll entgegengewirkt werden.

Die Erfindung betrifft auch eine Befestigungsanordnung mit einem erfindungsgemässen Injektor und mit einem Anker mit einem Ankerbolzen, welcher die Durchgangsöffnung des Injektors durchläuft. In dieser betriebsbereiten Konfiguration ist der Injektor und insbesondere dessen Kolbenscheibe auf den Ankerbolzen des Ankers aufgesteckt. Insbesondere kann der Anker eine am Ankerbolzen angeordnete Ankermutter aufweisen, welche ein Axiallager für den Injektor bildet und den Injektor somit in einer Richtung axial am Ankerbolzen festlegt. Beim Anziehen dieser Ankermutter wird der Injektor an das Anbauteil oder das Substrat gepresst und die aushärtbare Masse hierdurch vermischt und gleichzeitig in den Ringraum gepresst. Die Ankermutter kann unmittelbar aber auch mittelbar an der Kolbenscheibe anliegen.

Die Erfindung betrifft auch ein Gebinde enthaltend einen erfindungsgemässen Injektor und einen Anker. Unter einem Gebinde kann in fachüblicher Weise insbesondere die Gesamtheit aus Verpackung und der verpackten Ware verstanden werden.

Die Erfindung betrifft überdies ein Verfahren zum Installieren eines Ankers mit einem Ankerbolzen, wobei in dem Verfahren der Ankerbolzen des Ankers in einem Loch angeordnet wird und mittels eines erfindungsgemässen Injektors aushärtbare Masse, insbesondere aus dem Injektor, in einen den Ankerbolzen im Loch umgebenden Ringraum eingebracht wird. Demgemäss wird der Injektor bestimmungsgemäss eingesetzt.

Besonders bevorzugt ist es, dass die Kolbenscheibe des Injektors durch Anziehen einer am Ankerbolzen angeordneten Ankermutter an eine Oberfläche, insbesondere an eine Oberfläche des Substrats, in dem der Ringraum zumindest bereichsweise gebildet ist, oder insbesondere an eine Oberfläche eines Anbauteils, in dem der Ringraum zumindest bereichsweise gebildet ist, angepresst wird und hierbei die aushärtbare Masse mittels der Kolbenscheibe verdrängt und in den Ringraum eingebracht wird.

Der erfindungsgemässe Injektor kann auch zur Setzkontrolle des Ankers verwendet werden. Beispielsweise kann die an der Dichtungsscheibe angeordnete Dichtungshülse so dimensioniert werden, dass sie nach korrekter Installation des Ankers mit Injektor auf der Aussenseite des Injektors axial über die Kolbenscheibe übersteht. Wird die Innenseite der Dichtungshülse farblich gekennzeichnet, zum Beispiel in grün, so erhält der Anwender eine optische Bestätigung, dass das System korrekt installiert wurde.

Regelmässig wird der erfindungsgemässe Injektor zwischen dem Anbauteil und der Ankermutter positioniert werden, grundsätzlich könnte der Injektor aber auch zwischen dem Substrat und dem Anbauteil angeordnet werden.

Merkmale, die im Zusammenhang mit dem erfindungsgemässen Injektor erläutert werden, können auch bei der erfindungsgemässen Befestigungsanordnung, dem erfindungsgemässen Gebinde oder/und dem erfindungsgemässen Verfahren zum Einsatz kommen, so wie auch umgekehrt Merkmale, die im Zusammenhang mit der erfindungsgemässen Befestigungsanordnung, dem erfindungsgemässen Gebinde oder/und dem erfindungsgemässen Verfahren erläutert werden, auch beim erfindungsgemässen Injektor zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Längsschnittansicht einer erfindungsgemässen Befestigungsanordnung mit einem erfindungsgemässen Injektor und einem Anker, wobei der Ankerbolzen des Ankers in einem Loch angeordnet ist, welches sich durch ein Anbauteil hindurch in ein Substrat erstreckt;
- Figur 2:: eine Ansicht der Kolbenscheibe des Injektors aus Figur 1 von unten;
- Figur 3:: eine vergrösserte Ansicht des Injektors aus Figur 1 in Längsschnittansicht, das heisst gemäss Schnitt A-A der Figur 2;
- Figur 4:: eine Ansicht der Kolbenscheibe des Injektors gemäss einer zweiten Ausführungsform von unten;
- Figur 5:: der Injektor der zweiten Ausführungsform in Längsschnittansicht, das heisst gemäss Schnitt A-A der Figur 4;
- Figur 6:: eine durchscheinende Ansicht eines Injektors gemäss einer dritten Ausführungsform von oben;
- Figur 7:: der Injektor der dritten Ausführungsform in Längsschnittansicht, das heisst gemäss Schnitt A-A der Figur 6;
- Figur 8:: die Kolbenscheibe des Injektors der dritten Ausführungsform von unten;
- Figur 9:: die Kolbenscheibe des Injektors der dritten Ausführungsform in Längsschnittansicht, das heisst gemäss Schnitt A-A der Figur 8;
- Figur 10:: die Dichtungsscheibe des Injektors der dritten Ausführungsform von oben;
- Figur 11:: die Dichtungsscheibe des Injektors der dritten Ausführungsform in Längsschnittansicht, das heisst gemäss Schnitt A-A der Figur 10;
- Figur 12:: eine Ansicht eines Injektors gemäss einer vierten Ausführungsform von oben;
- Figur 13:: der Injektor der vierten Ausführungsform in Längsschnittansicht, das heisst gemäss Schnitt A-A der Figur 12;
- Figur 14:: die Kolbenscheibe des Injektors der vierten Ausführungsform von unten;
- Figur 15:: die Kolbenscheibe des Injektors der vierten Ausführungsform in Längsschnittansicht, das heisst gemäss Schnitt A-A der Figur 14;
- Figur 16:: die Dichtungsscheibe des Injektors der vierten Ausführungsform von oben;
- Figur 17:: die Dichtungsscheibe des Injektors der vierten Ausführungsform in Längsschnittansicht, das heisst gemäss Schnitt A-A der Figur 16; und
- Figur 18:: eine Ansicht entsprechend Figur 1 mit zusätzlichen Pfeilen zur Erläuterung des erfindungsgemässen Verfahrens.

Im Wesentlichen gleich wirkende Elemente sind in den verschiedenen Ausführungsbeispielen mit denselben Bezugszeichen gekennzeichnet.

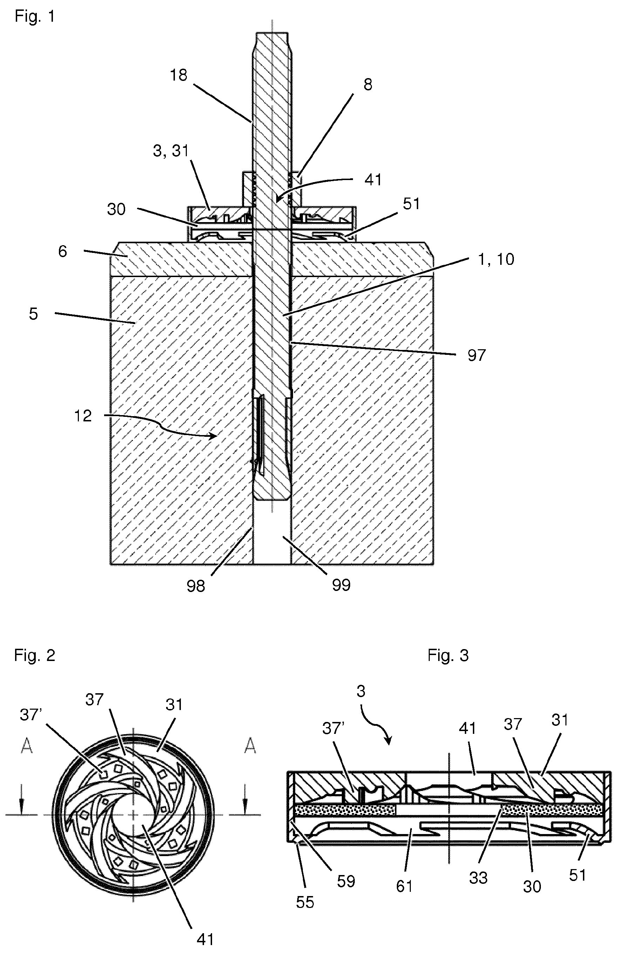

Ein erstes Ausführungsbeispiel einer Befestigungsanordnung ist in den Figuren 1 bis 3 gezeigt. Die Befestigungsanordnung weist einen Anker 1 mit einem Ankerbolzen 10 sowie einen Injektor 3 auf.

Im vorderen Bereich des Ankers 1 weist der Anker 1 eine Verankerungszone 12 auf, in welcher der Ankerbolzen 10 an der Wand 98 eines Lochs 99 verankert werden kann. In Figur 1 ist der Anker 1 beispielhaft als Spreizanker des Bolzentyps dargestellt. Als solcher weist der Anker 1 in der Verankerungszone 12 eine Spreizhülse und einen am Ankerbolzen 10 gebildeten Spreizkonus zum radialen Anpressen der Spreizhülse an die Wand 98 des Lochs 99 bei einer Zuglast im Ankerbolzen 10 auf. Die Ausgestaltung des Ankers 1 als Spreizanker des Bolzentyps ist aber nur beispielhaft zu sehen, und der Anker 1 kann auch andersartig wirkende Verankerungszonen 12 aufweisen. Vorzugsweise ist die Verankerungszone 12 eine mechanische Verankerungszone, also eine Verankerungszone, welche eine zumindest vorwiegend formschlüssige oder reibschlüssige Verankerung bewirkt. Grundsätzlich könnte die Verankerungszone 12 aber auch eine chemische Verankerungszone sein, also eine Verankerungszone, welche eine zumindest vorwiegend stoffschlüssige Verankerung bewirkt.

Im rückwärtigen Bereich des Ankers 1 ist der Ankerbolzen 10 mit einem Aussengewinde 18 versehen. Auf das Aussengewinde ist eine Ankermutter 8 mit einem zum Aussengewinde 18 korrespondierenden Innengewinde aufgeschraubt.

Die Befestigungsanordnung weist ferner einen weiter unten im Detail erläuterten Injektor 3 auf, wobei der Ankerbolzen 10 des Ankers 1 durch den Injektor 3 hindurch verläuft.

Figur 1 zeigt die Befestigungsanordnung bei der Installation des Ankers 1. Demgemäss ist das vordere Ende des Ankerbolzens 10 des Ankers 1 in ein Loch 99 in einem Anbauteil 6 und einem an das Anbauteil 6 angrenzenden Substrat 5, beispielsweise Betonsubstrat, eingeführt. Der den Ankerbolzen 10 umlaufende Injektor 3 befindet sich zwischen der Ankermutter 8 und dem am Substrat 5 anliegenden Anbauteil 6 und somit auch zwischen der Ankermutter 8 und dem Substrat 5. Im Loch 99 ist um den Ankerbolzen 10 herum ein Ringraum 97 gebildet, der sich vom Anbauteil 6 in das Substrat 5 erstreckt.

Der Injektor 3 der Ausführungsform der Figuren 1 bis 3 weist eine metallische Kolbenscheibe 31 mit einer Durchgangsöffnung 41 auf, durch welche der Ankerbolzen 10 hindurch verläuft. Der Kolbenscheibe 31 vorgelagert ist ein Reservoir 33, beispielsweise ein Folienbeutel, welches eine Menge 30 einer aushärtbaren Masse enthält. Das Reservoir 33 ist ringförmig ausgebildet und umgibt den Ankerbolzen 10. Dem Reservoir 33 vorgelagert ist eine Dichtungsscheibe 51, welche ebenfalls eine Durchgangsöffnung 61 aufweist, durch welche der Ankerbolzen 10 hindurch verläuft. Das Reservoir 33 befindet sich also zwischen der Kolbenscheibe 31 und der Dichtungsscheibe 51, wobei die Kolbenscheibe 31 der Ankermutter 8 und die Dichtungsscheibe 51 dem Substrat 5 und dem Anbauteil 6 zugewandt ist. Die Dichtungsscheibe 51 weist auf ihrer der Kolbenscheibe 31 abgewandten Aussenseite, das heisst auf ihrer der Menge 30 der aushärtbaren Masse abgewandten Aussenseite, eine Dichtlippe 55 auf.

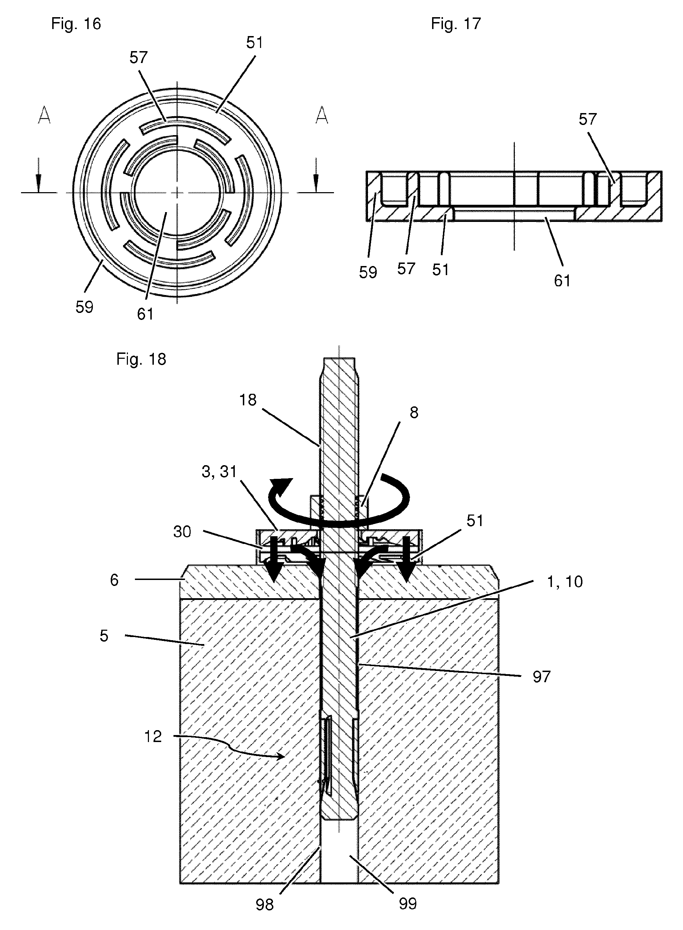

In Figur 18 ist die Betriebsweise des Injektors 3 der Ausführungsform der Figuren 1 bis 3 in einem erfindungsgemässen Verfahren durch Pfeile angedeutet. Wie Figur 18 zeigt, wird die Ankermutter 8 am Aussengewinde 18 des Ankerbolzens 10 angezogen. Da sich der Ankerbolzen 10 an seiner Verankerungszone 12 im Substrat 5 verankert, nähert sich die Ankermutter 8 hierbei an das Substrat 5 an. Da die Ankermutter 8 querschnittsgrösser als die Durchgangsöffnung 41 in der Kolbenscheibe 31 ist, wird hierbei die Kolbenscheibe 31 von der Ankermutter 8 mitgenommen. Infolgedessen wird der Injektor 3 zwischen der Ankermutter 8 einerseits und dem Substrat 5 und gegebenenfalls dem Anbauteil 6, welche ein Widerlager für den Injektor 3 bilden, andererseits zusammengepresst und die Kolbenscheibe 31 an die Dichtungsscheibe 51 angepresst. Hierbei wird das Reservoir 33 enthaltend die Menge 30 der aushärtbaren Masse ausgepresst, und aushärtbare Masse gelangt aus dem Injektor 3 in den Ringraum 97 um den Ankerbolzen 10, wo die Masse schliesslich aushärtet, das heisst erstarrt. Es wird also aushärtbare Masse zwischen der als Kolben wirkenden Kolbenscheibe 31 und dem Anbauteil 6 aus dem Injektor 3 in den Ringraum 97 um den Ankerbolzen 10 verdrängt.

Wie insbesondere die Figuren 2 und 3 zeigen, weist die Kolbenscheibe 31 des Injektors 3 der Ausführungsform der Figuren 1 bis 3 Mischkörper 37 und 37' auf, welche zur Menge 30 der aushärtbaren Masse hin, insbesondere zum Reservoir 33 hin, von der Kolbenscheibe 31 vorstehen. Die Mischkörper 37 sind zapfenförmig und die Mischkörper 37' bogenförmig ausgebildet. Die Mischkörper 37 und 37' bilden zusammen eine komplexe Geometrie, die sowohl bei der reiner Translation von Kolbenscheibe 31 und Dichtungsscheibe 51 aufeinander zu als auch bei reiner relativer Rotation von Kolbenscheibe 31 und Dichtungsscheibe 51 zueinander ohne Translation eine gute Vermischung der aushärtbaren Masse gewährleistet.

Die zur Durchführung des Ankerbolzens 10 vorgesehene Durchgangsöffnung 41 in der Kolbenscheibe 31 kann beispielsweise kreisrund ausgeführt sein. Wie insbesondere Figur 3 zeigt, weist die Durchgangsöffnung 61 der Dichtungsscheibe 51 hingegen eine von einer Kreisform abweichende Querschnittsform auf, so dass an der Durchgangsöffnung 61 der Dichtungsscheibe 51 Mischlappen für die aushärtbare Masse gebildet sind.

Wie insbesondere die Figuren 1 und 3 zeigen, weist der Injektor 3 der Ausführungsform der Figuren 1 bis 3 eine Dichtungshülse 59 auf, in welcher die Kolbenscheibe 31 verschiebbar angeordnet ist, und welche den Injektor 3, insbesondere sein Reservoir 33, in radialer Richtung abdichtet. In der Ausführungsform der Figuren 1 bis 3 ist die vorzugsweise zylindrische Dichtungshülse 59 fest an der Dichtungsscheibe 51 angeordnet und insbesondere einstückig mit der Dichtungsscheibe 51 ausgebildet. Grundsätzlich können die Dichtungshülse 59 und die Dichtungsscheibe 51 aber auch getrennte Teile sein. Für eine besonders gute Dichtwirkung können die Dichtungsscheibe 51 und/oder die Dichtungshülse 59 insbesondere aus einem Kunststoffmaterial bestehen.

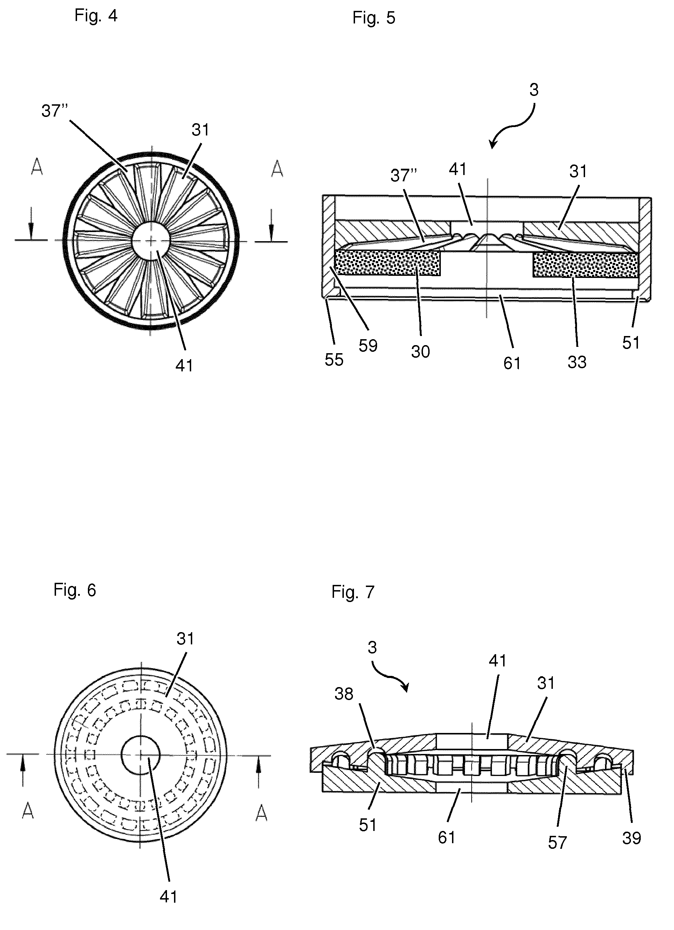

Die Figuren 4 und 5 zeigen eine alternative Ausführungsform eines Injektors 3. Der Injektor 3 der Figuren 4 und 5 kann bei der Befestigungsanordnung der Figuren 1 bis 3 und bei dem in Figur 18 gezeigten Verfahren anstelle des dort jeweils gezeigten Injektors 3 verwendet werden.

Der Injektor 3 der Ausführungsform der Figuren 4 und 5 realisiert eine Reihe von Merkmalen des Injektors 3 der Ausführungsform der Figuren 1 bis 3 in analoger Weise, so dass die obenstehende Beschreibung insoweit analog angewandt werden kann.

Insbesondere unterscheidet sich der Injektor 3 der Ausführungsform der Figuren 4 und 5 jedoch vom Injektor 3 der Ausführungsform der Figuren 1 bis 3 durch die Ausgestaltung der Mischkörper 37" an der Kolbenscheibe 31: Bei der Ausführungsform der Figuren 4 und 5 weist die Kolbenscheibe 31 keilförmige Mischkörper 37" auf, die sich radial nach aussen verbreitern. In der Längsschnittansicht (Figur 5) ist die Kolbenscheibe 31 auf ihrer der Menge 30 der aushärtbaren Masse zugewandten Seite konkav ausgebildet.

Ferner unterscheidet sich der Injektor 3 der Ausführungsform der Figuren 4 und 5 vom Injektor 3 der Ausführungsform der Figuren 1 bis 3 durch die Ausgestaltung der Durchgangsöffnung 61 in der Dichtungsscheibe 51: Die Durchgangsöffnung 61 in der Dichtungsscheibe 51 der Ausführungsform der Figuren 4 und 5 ist im Querschnitt im Wesentlichen kreisrund ausgestaltet.

Die Dichtungsscheibe 51 der Ausführungsform der Figuren 4 und 5 weist abermals eine Dichtungshülse 59 auf, welche verhindert, dass aushärtbare Masse radial weggedrückt wird, und welche stattdessen dafür sorgt, dass aushärtbare Masse hauptsächlich in die Mitte des Injektors 3 und somit in das Loch 99 und in den Ringraum 97 gedrückt wird. Die Dichtungsscheibe 51 der Ausführungsform der Figuren 4 und 5 weist weiterhin abermals auf ihrer der Kolbenscheibe 31 abgewandten Aussenseite, das heisst auf ihrer der Menge 30 der aushärtbaren Masse abgewandten Aussenseite, eine Dichtlippe 55 auf, welche im Betrieb des Injektors an der Oberfläche des Anbauteils 6 anliegt.

Die Figuren 6 bis 11 zeigen eine dritte, alternative Ausführungsform eines Injektors 3. Der Injektor 3 der Figuren 6 bis 11 kann bei der Befestigungsanordnung der Figuren 1 bis 3 und bei dem in Figur 18 gezeigten Verfahren anstelle des dort jeweils gezeigten Injektors 3 verwendet werden.

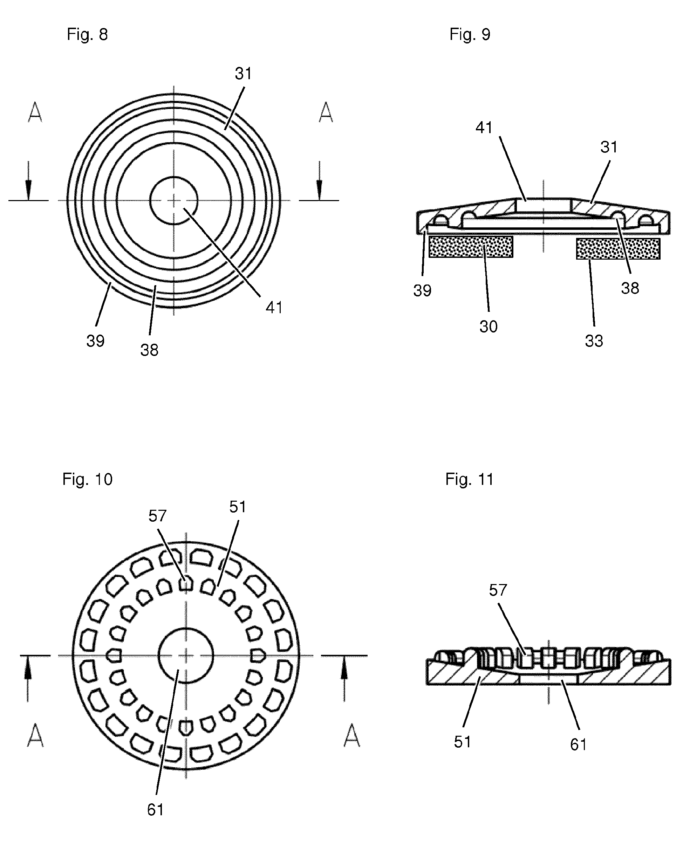

Der Injektor 3 der Figuren 6 bis 11 weist abermals eine Kolbenscheibe 31 mit einer Durchgangsöffnung 41 für den Ankerbolzen 10 sowie eine Dichtungsscheibe 51 mit einer Durchgangsöffnung 61 für den Ankerbolzen 10 auf, wobei die beiden Durchgangsöffnungen 41 und 61 miteinander fluchten, und wobei zwischen der Kolbenscheibe 31 und der Dichtungsscheibe 51 ein Reservoir 33 mit einer Menge 30 einer aushärtbaren Masse angeordnet ist. Der Übersichtlichkeit halber ist das Reservoir 33 mit der Menge 30 der aushärtbaren Masse lediglich in Figur 9 gezeigt.

Bei der Ausführungsform der Figuren 6 bis 11 sind sowohl die Kolbenscheibe 31 als auch die Dichtungsscheibe 51 aus einem Metallmaterial gebildet. Abermals sind zapfenförmige Mischkörper 57 vorgesehen, wobei diese bei der Ausführungsform der Figuren 6 bis 11 an der Dichtungsscheibe 51 angeordnet sind. Die Kolbenscheibe 31 weist, hier beispielhaft ringförmige, Ausnehmungen 38 zum Aufnehmen der Mischkörpern 57 auf. Zusätzlich oder alternativ können auch an der Kolbenscheibe 31 Mischkörper und vorzugsweise an der Dichtungsscheibe 51 zu den Mischkörpern an der Kolbenscheibe 31 korrespondierende Ausnehmungen angeordnet sein.

Bei der Ausführungsform der Figuren 6 bis 11 ist abermals eine Dichtungshülse 39 vorgesehen, welche den Injektor 3 in radialer Richtung abdichtet. Im Gegensatz zu den beiden zuvor beschriebenen Ausführungsformen ist die Dichtungshülse 39 gemäss der Ausführungsform der Figuren 6 bis 11 allerdings axial fest an Kolbenscheibe 31 angeordnet und vorzugsweise einstückig mit der Kolbenscheibe 31 ausgeführt. Die Dichtungsscheibe 51 der Ausführungsform der Figuren 6 bis 11 ist demgemäss axial verschiebbar im Inneren der Dichtungshülse 39 angeordnet.

Bei der Ausführungsform der Figuren 6 bis 11 sind sowohl die Kolbenscheibe 31 als auch die Dichtungsscheibe 51 auf der jeweils der Menge 30 der aushärtbaren Masse zugewandten Innenseite konkav ausgebildet.

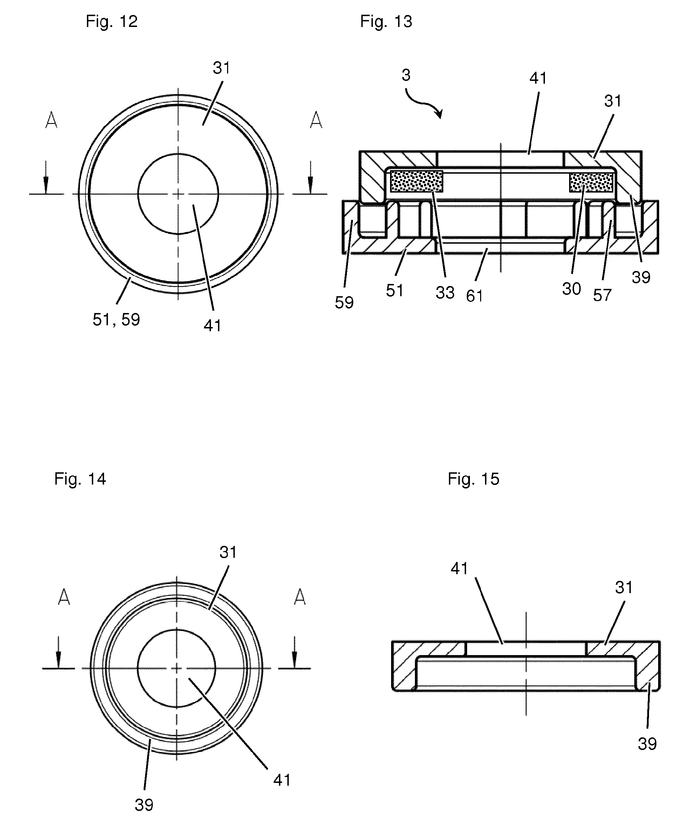

Die Figuren 12 bis 17 zeigen eine vierte, alternative Ausführungsform eines Injektors 3. Der Injektor 3 der Figuren 12 bis 17 kann bei der Befestigungsanordnung der Figuren 1 bis 3 und bei dem in Figur 18 gezeigten Verfahren anstelle des dort jeweils gezeigten Injektors 3 verwendet werden.

Der Injektor 3 der Figuren 12 bis 17 weist abermals eine Kolbenscheibe 31 mit einer Durchgangsöffnung 41 für den Ankerbolzen 10 sowie eine Dichtungsscheibe 51 mit einer Durchgangsöffnung 61 für den Ankerbolzen 10 auf, wobei die beiden Durchgangsöffnungen 41 und 61 miteinander fluchten, und wobei zwischen der Kolbenscheibe 31 und der Dichtungsscheibe 51 ein Reservoir 33 mit einer Menge 30 einer aushärtbaren Masse angeordnet ist. Der Übersichtlichkeit halber ist das Reservoir 33 mit der Menge 30 der aushärtbaren Masse lediglich in Figur 13 gezeigt.

Bei der Ausführungsform der Figuren 12 bis 17 sind sowohl die Kolbenscheibe 31 als auch die Dichtungsscheibe 51 aus einem Metallmaterial gebildet. Abermals sind Mischkörper 57 an der Dichtungsscheibe 51 vorgesehen, wobei diese Mischkörper 57 bei der Ausführungsform der Figuren 12 bis 17 kreisbogenförmig ausgebildet sind.

Bei der Ausführungsform der Figuren 12 bis 17 sind zwei Dichtungshülsen 39 und 59 vorgesehen, welche den Injektor 3 in radialer Richtung abdichten, nämlich eine erste Dichtungshülse 39, die axial fest an Kolbenscheibe 31 angeordnet und vorzugsweise einstückig mit der Kolbenscheibe 31 ausgeführt ist, und eine zweite Dichtungshülse 59, die axial fest an Dichtungsscheibe 51 angeordnet und vorzugsweise einstückig mit der Dichtungsscheibe 51 ausgeführt ist. Dabei ist die Dichtungshülse 39 durchmesserkleiner als die Dichtungshülse 59 ausgeführt und die Kolbenscheibe 31 mit der Dichtungshülse 39 ist axial verschiebbar im Inneren der Dichtungshülse 59 der Dichtungsscheibe 51 angeordnet.

## Patentansprüche

1. Injektor (3) zum Verfüllen eines um einen Ankerbolzen (10) gebildeten Ringraums (97), mit einer Kolbenscheibe (31), welche eine Durchgangsöffnung (41) für den Ankerbolzen (10) aufweist, und
einer der Kolbenscheibe (31) vorgelagerten Menge (30) einer aushärtbaren Masse, wobei die Kolbenscheibe (31) einen Kolben zum Verdrängen zumindest eines Teils der Menge (30) der aushärtbaren Masse in den Ringraum (97) bildet.

2. Injektor (3) nach Anspruch 1,
**dadurch gekennzeichnet,**
**dass** die Menge (30) der aushärtbaren Masse in einem Reservoir (33) angeordnet ist.

3. Injektor (3) nach einem der vorstehenden Ansprüche,
**dadurch gekennzeichnet,**
**dass** er eine Dichtungsscheibe (51) aufweist, wobei die Menge (30) der aushärtbaren Masse zumindest teilweise zwischen der Kolbenscheibe (31) und der Dichtungsscheibe (51) angeordnet ist.

4. Injektor (3) nach einem der vorstehenden Ansprüche,
**dadurch gekennzeichnet,**
**dass** er zumindest eine Dichtungshülse (39, 59) aufweist, wobei die Menge (30) der aushärtbaren Masse zumindest teilweise innerhalb der Dichtungshülse (39, 59) angeordnet ist.

5. Injektor (3) nach Anspruch 4,
**dadurch gekennzeichnet,**
**dass** die Kolbenscheibe (31) axial verschiebbar innerhalb der Dichtungshülse (59) angeordnet ist, oder
**dass** die Dichtungshülse (39) an der Kolbenscheibe (31) befestigt ist.

6. Injektor (3) nach einem der vorstehenden Ansprüche,
**dadurch gekennzeichnet,**
**dass** er Mischkörper (37, 57) aufweist, die zur Menge (30) der aushärtbaren Masse hin vorstehen.

7. Injektor (3) nach Anspruch 6,
**dadurch gekennzeichnet,**
**dass** er Ausnehmungen (38) zum Aufnehmen zumindest eines Teils der Mischkörper (57) beim Verdrängen des zumindest einen Teils der Menge (30) der aushärtbaren Masse mittels der Kolbenscheibe (31) aufweist.

8. Injektor (3) nach einem der vorstehenden Ansprüche,
**dadurch gekennzeichnet,**
**dass** die Kolbenscheibe (31) auf ihrer der Menge (30) der aushärtbaren Masse zugewandten Seite zumindest bereichsweise konkav ausgebildet ist.

9. Befestigungsanordnung mit einem Injektor (3) nach einem der vorstehenden Ansprüche und mit einem Anker (1) mit einem Ankerbolzen (10), welcher die Durchgangsöffnung (41) des Injektors (3) durchläuft.

10. Gebinde enthaltend einen Injektor (3) nach einem der Ansprüche 1 bis 8 und einen Anker (1).

11. Verfahren zum Installieren eines Ankers (1) mit einem Ankerbolzen (10), bei dem der Ankerbolzen (10) des Ankers (1) in einem Loch (99) angeordnet wird und mittels eines Injektors (3) nach einem der Ansprüche 1 bis 8 aushärtbare Masse in einen den Ankerbolzen (10) im Loch (99) umgebenden Ringraum (97) eingebracht wird.

12. Verfahren nach Anspruch 11,
**dadurch gekennzeichnet,**
**dass** die Kolbenscheibe (31) des Injektors (3) durch Anziehen einer am Ankerbolzen (10) angeordneten Ankermutter (8) an eine Oberfläche angepresst wird und hierbei die aushärtbare Masse mittels der Kolbenscheibe (31) verdrängt und in den Ringraum (97) eingebracht wird.
